# EUROPEAN PATENT APPLICATION

(11) **EP 4 614 658 A1**
(43) Date of publication of application: **10.09.2025**
(21) Application number: 24810885.4
(22) Date of filing: 08.05.2024
(51) Int. Cl.: H01M 10/12, H01M 50/308, H01M 50/35, H01M 50/392, H01M 50/655

(54) **LEAD-ACID BATTERY AND LIQUID STOPPER FOR LEAD-ACID BATTERY**

(30) Priority: 24.05.2023 JP 2023085236
(71) Applicant: GS Yuasa International Ltd., Kisshoin, Minami-ku, Kyoto-shi, Kyoto 601-8520 (JP)
(72) Inventor: YAMASHITA Hiroto, Kyoto-shi, Kyoto 601-8520 (JP); SEKIYA Kazuki, Kyoto-shi, Kyoto 601-8520 (JP)
(74) Representative: Isarpatent
(86) International application number: PCT/JP2024/017104
(87) International publication number: WO 2024/241877

(57) **Abstract**

A lead-acid battery 1 includes a battery case 10, electrode plates 30A and 30B accommodated in the battery case 10, an electrolytic solution U accommodated in the battery case 10, and a liquid stopper 70 attached to the battery case 10. The liquid stopper 70 includes a stopper body 71 of a cylindrical shape, a splash preventing body 90 located inside the stopper body, and a catalyst device 100 which promotes a reaction to produce water from gas generated by a charge-discharge reaction. The catalyst device 100 is either entirely or partially inside the stopper body and is located, in relation to the splash preventing body 90, below the splash preventing body 90.

## Description

### TECHNICAL FIELD

The present invention relates to a liquid stopper used for a lead-acid battery.

### BACKGROUND ART

In a lead-acid battery, since an electrolytic solution (water) is electrolyzed by a charge reaction, and oxygen gas and hydrogen gas are produced, the lead-acid battery has a structure in which an exhaust hole is provided at an upper part of a liquid stopper or a lid to exhaust the oxygen gas and the hydrogen gas. As a countermeasure against a decrease in the electrolytic solution caused by the electrolysis, it is possible to employ a method to provide the lead-acid battery with a catalyst component for promoting a recombination reaction of the oxygen gas and the hydrogen gas (i.e., a reaction to change the gases back into water).

In relation to the above-described technique, Patent Literature 1 indicated below describes, in paragraph 18, "A catalyst component for a lead-acid battery, the catalyst component having a catalyst layer containing a catalyst for promoting a reaction to produce water or water vapor from oxygen and hydrogen, and a configuration by which at least a part of the water or water vapor produced as a result of the catalytic reaction is condensed and returned to an interior of the lead-acid battery, and having gas permeability as a whole". Further, paragraph 46 includes the description "More preferably, the baffle plate may be inclined toward the inner side of the lead-acid battery. By the inclined baffle plate, the liquid droplets are promoted to slip down toward the inner side of the lead-acid battery, and a decrease in the electrolytic solution is further suppressed".

In addition, Patent Literature 2 indicated below includes, in paragraph 16, the description "A container according to one aspect of the present invention pertains to a container which accommodates therein a catalyst material in a lead-acid battery, the catalyst material containing a catalyst for promoting a reaction to produce water or water vapor from oxygen and hydrogen, and the container having an opening portion covered with a film, in which the film communicates the oxygen, the hydrogen, and the water vapor between the catalyst material and outside of the container, and the film is oriented at an angle of 0 degrees or more and 80 degrees or less with respect to the gravity direction.

### CITATION LIST

### Patent Literature

Patent Literature 1: Japanese Patent No. 6576297
Patent Literature 2: Japanese Utility Model Registration No. 3229214

### DISCLOSURE OF INVENTION

### PROBLEMS TO BE SOLVED BY THE INVENTION

In an in-vehicle lead-acid battery, when a catalyst device (a catalyst component) and a splash preventing body (a baffle plate) are arranged in this order from above in a liquid stopper having an exhaust hole at an upper part thereof, it has been found that water recombined from gas by the catalyst device may be spattered upward by vibration of a vehicle and leak out from the exhaust hole before falling into a battery container along the splash preventing body. A similar problem is found not only in the case of an in-vehicle energy storage apparatus but also in the case where some vibration is applied from the outside.

An object of the present invention is to prevent water recombined from gas by a catalyst device from leaking out from an exhaust hole at an upper part of a liquid stopper.

### MEANS FOR SOLVING THE PROBLEMS

A lead-acid battery includes a battery case, an electrode plate accommodated in the battery case, an electrolytic solution accommodated in the battery case, and a liquid stopper attached to the battery case.

The liquid stopper includes a stopper body of a cylindrical shape, a splash preventing body located inside the stopper body, and a catalyst device which promotes a reaction to produce water from gas generated by a charge-discharge reaction. The catalyst device is either entirely or partially inside the stopper body and is located, in relation to the splash preventing body, below the splash preventing body.

The present technique can also be used for a liquid stopper for a lead-acid battery.

### EFFECT OF THE INVENTION

With the present technique, it is possible to prevent water recombined from the gas by the catalyst device from leaking out from an exhaust hole at an upper part of the liquid stopper.

### BRIEF DESCRIPTION OF DRAWINGS

FIG. 1 is a perspective view of a lead-acid battery.
FIG. 2 is a perspective view of a battery container.
FIG. 3 is a cross-sectional view of the lead-acid battery (cross-sectional view taken along line A-A of FIG. 1).
FIG. 4 is a front view of a liquid stopper.
FIG. 5 is an enlarged view of a part (the part of a liquid stopper) of FIG. 3.
FIG. 6 is a horizontal sectional view of the liquid stopper.
FIG. 7 is a perspective view of a catalyst device which has been partially cut out.
FIG. 8 is a perspective view of a catalyst device which has been partially cut out.
FIG. 9A is a cross-sectional view of a part of a liquid stopper.
FIG. 9B is a cross-sectional view of a part of a liquid stopper.
FIG. 10 is a cross-sectional view of a liquid stopper.
FIG. 11 is a horizontal sectional view of the liquid stopper.
FIG. 12 is a partial cross-sectional view of the liquid stopper.
FIG. 13 is a horizontal sectional view of a liquid stopper.
FIG. 14 is an illustration showing the state in which a catalyst device is inclined and arranged.
FIG. 15 is a cross-sectional view of a liquid stopper.
FIG. 16 is a cross-sectional view of a liquid stopper.
FIG. 17 is a cross-sectional view of a liquid stopper.
FIG. 18A is an illustration showing an arrangement of catalyst devices.
FIG. 18B is an illustration showing the arrangement of the catalyst devices.
FIG. 19 is a front view of a liquid stopper.

### DESCRIPTION OF EMBODIMENTS

### (Outline of Present Embodiment)

(1) A lead-acid battery according to an embodiment of the present invention includes a battery case, an electrode plate accommodated in the battery case, an electrolytic solution accommodated in the battery case, and a liquid stopper attached to the battery case.

The liquid stopper includes a stopper body of a cylindrical shape, a splash preventing body located inside the stopper body, and a catalyst device which promotes a reaction to produce water from gas generated by a charge-discharge reaction. The catalyst device is either entirely or partially inside the stopper body and is located, in relation to the splash preventing body, below the splash preventing body.

According to the lead-acid battery described in (1) above, since the catalyst device is located below the splash preventing body, the splash preventing body can prevent water recombined from the gas by the catalyst device from being splashed upward. Therefore, when vibration is applied from the outside, it is difficult for the water recombined from the gas by the catalyst device to reach an exhaust hole at an upper part of the liquid stopper. Therefore, it is possible to make an improvement on a vibration overflow property of the electrolytic solution (water recombined from the gas).

(2) In the lead-acid battery described in (1) above, the catalyst device may include a case which is cylindrically shaped and has an opening in a surface, a catalyst layer which is accommodated in the case, and a permeable membrane which covers a surface of the catalyst layer and allows gas to pass therethrough, and the catalyst device may be disposed vertically or inclined with respect to the stopper body such that a surface of the permeable membrane has an angle with respect to a horizontal direction.

According to the lead-acid battery described in (2) above, water recombined from the gas easily returns to a battery container owing to the inclination of the catalyst device.

(3) In the lead-acid battery described in (1) or (2) above, the catalyst device may include a plurality of catalyst devices, and all of the catalyst devices may be arranged at a same height in an up-down direction, or at least some of the catalyst devices may be arranged at the same height in the up-down direction.

An ability to recombine that is required for the catalyst device depends on a catalyst quantity and a catalyst surface area. In a case where a plurality of catalyst devices are employed, the catalyst quantity and the surface area per catalyst device can be reduced as compared with the case of employing a single catalyst device. Consequently, the catalyst devices can be downsized. According to the lead-acid battery described in (3) above, since the plurality of downsized catalyst devices are arranged at the same height in the up-down direction, a total length of the liquid stopper can be reduced (the same applies to the case where some of the catalyst devices are arranged at the same height). Therefore, since it becomes possible to secure a distance from a liquid surface to the liquid stopper, even if the liquid surface is elevated, it is difficult for the liquid surface to reach the liquid stopper. As a result, it is possible to suppress leakage of the electrolytic solution from the exhaust hole along the inside of the liquid stopper.

### <Embodiment 1>

Embodiment 1 will be described with reference to the drawings.

### 1. Structure of Lead-Acid Battery 1

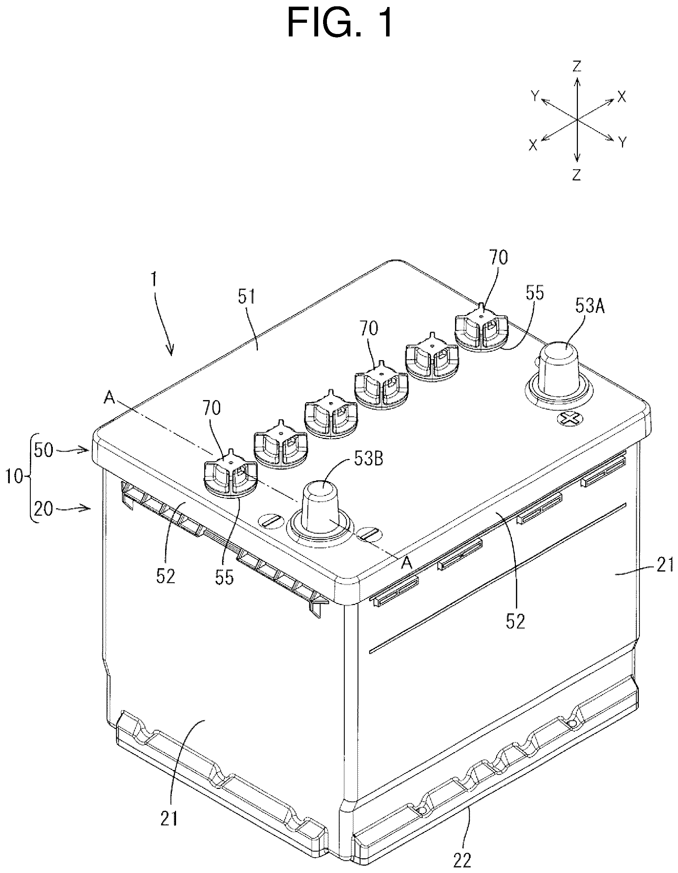

A lead-acid battery 1 is used as a power source of a movable body such as a four-wheeled vehicle or a two-wheeled vehicle. As illustrated in FIGS. 1 to 3, the lead-acid battery 1 is provided with a battery case 10, an electrode plate group 30 which serves as a power generation element, and an electrolytic solution 35. In the following description, a lateral width direction (a direction in which external terminals 53A and 53B are arranged) of the battery case 10 when the battery case 10 is disposed horizontally without being inclined with respect to an installation surface is defined as an X direction, an up-down direction (a height direction) of the battery case 10 is defined as a Z direction, and a depth direction of the same is defined as a Y direction.

The battery case 10 includes a battery container 20 and a lid member 50. The battery container 20 is made of a synthetic resin. The battery container 20 is of a box shape including four outer walls 21 and a bottom wall 22, and an upper surface thereof is open.

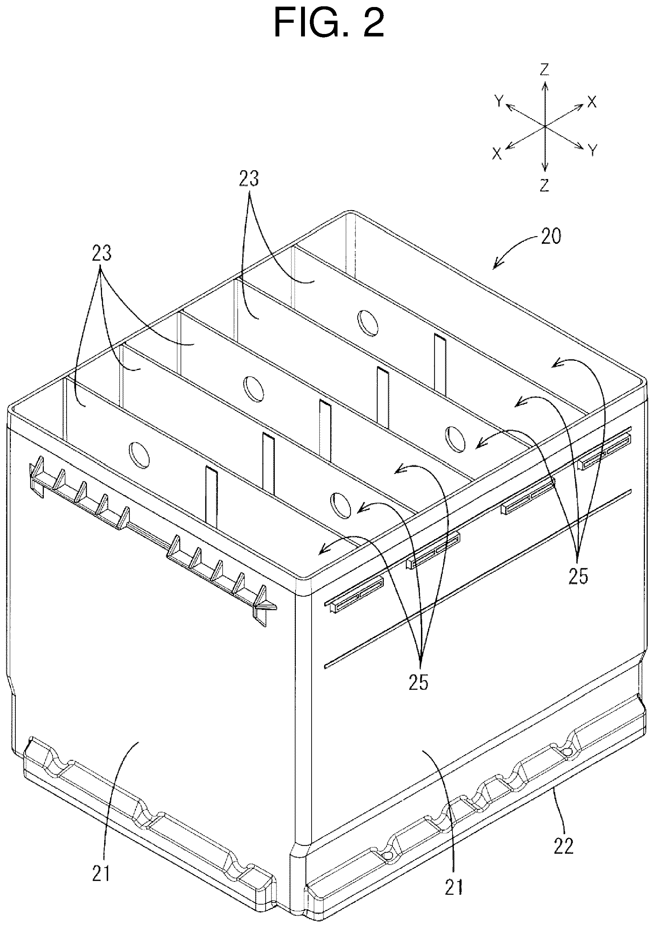

As illustrated in FIG. 2, an interior of the battery container 20 is partitioned into a plurality of cell chambers 25 by partition walls 23. Six cell chambers 25 are provided in the lateral width direction (i.e., the X direction in FIG. 2) of the battery container 20, and the electrode plate group 30 is accommodated in each of the cell chambers 25 together with the electrolytic solution 35 made of dilute sulfuric acid.

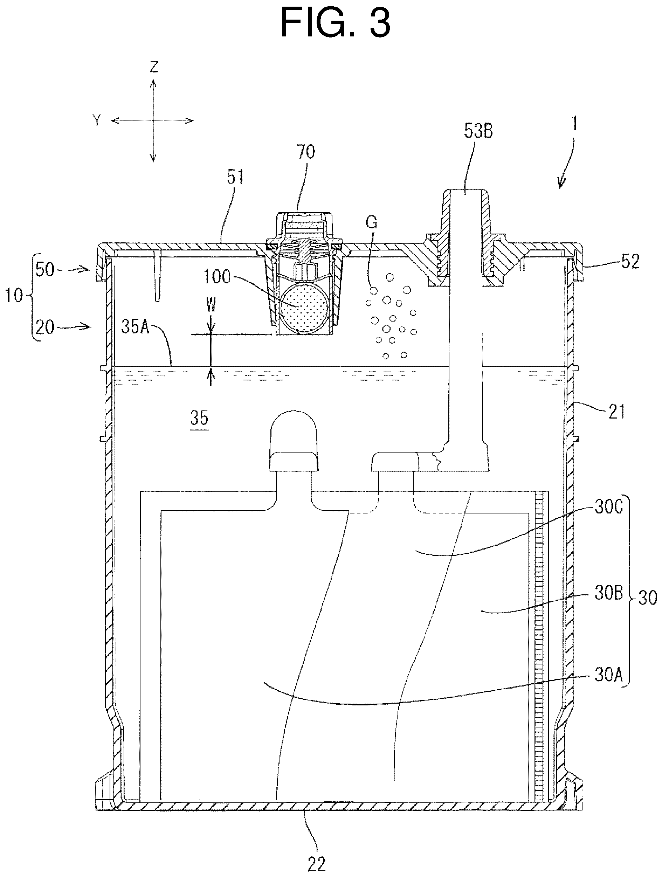

As illustrated in FIG. 3, the electrode plate group 30 is configured from a positive electrode plate 30A, a negative electrode plate 30B, and a separator 30C which serves as a partition between the two electrode plates 30A and 30B. Each of the electrode plates 30A and 30B is formed by filling a grid body with an active material.

The lid member 50 is made of a synthetic resin, and includes a flat plate portion 51 and an outer peripheral wall 52. The flat plate portion 51 is of a size which can seal the upper surface of the battery container 20. The outer peripheral wall 52 extends downward from an outer peripheral edge of the flat plate portion 51.

A lid partition wall (not illustrated) is formed to correspond to the partition walls 23 on a back surface of the lid member 50. The lid member 50 is attached so as to overlap the battery container 20, and is thermally welded to the battery container 20. The lid member 50 seals the upper surface of the battery container 20.

The lead-acid battery 1 is provided with a positive electrode external terminal 53A and a negative electrode external terminal 53B. As illustrated in FIG. 1, the positive electrode external terminal 53A and the negative electrode external terminal 53B are disposed on both sides of the lid member 50 in the X direction.

The lead-acid battery 1 is further provided with a liquid stopper 70. The liquid stopper 70 is attached to a liquid port 55 of the lid member 50. Six sets of liquid ports 55 and liquid stoppers 70 are provided to correspond to the six cell chambers 25. By removal of the liquid stopper 70, a rehydration solution can be supplied to each of the cell chambers 25 of the battery container 20 from the liquid port 55.

### 2. Structure of Liquid Stopper 70

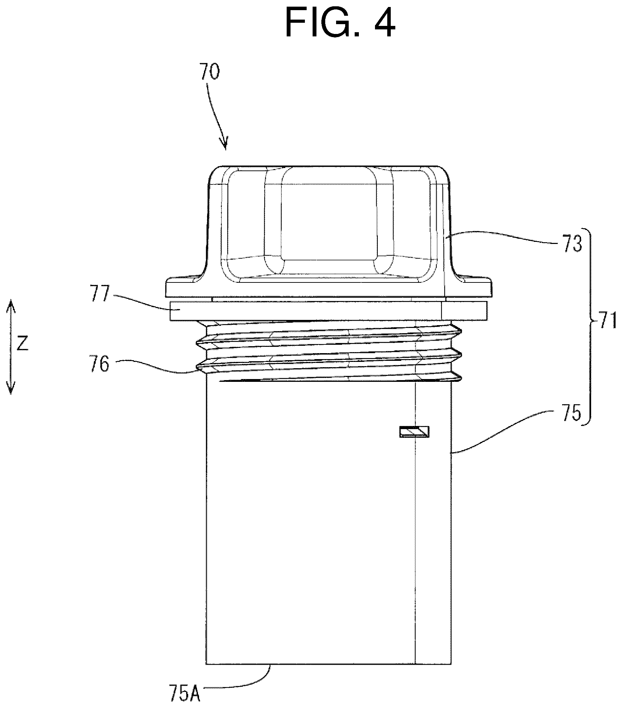

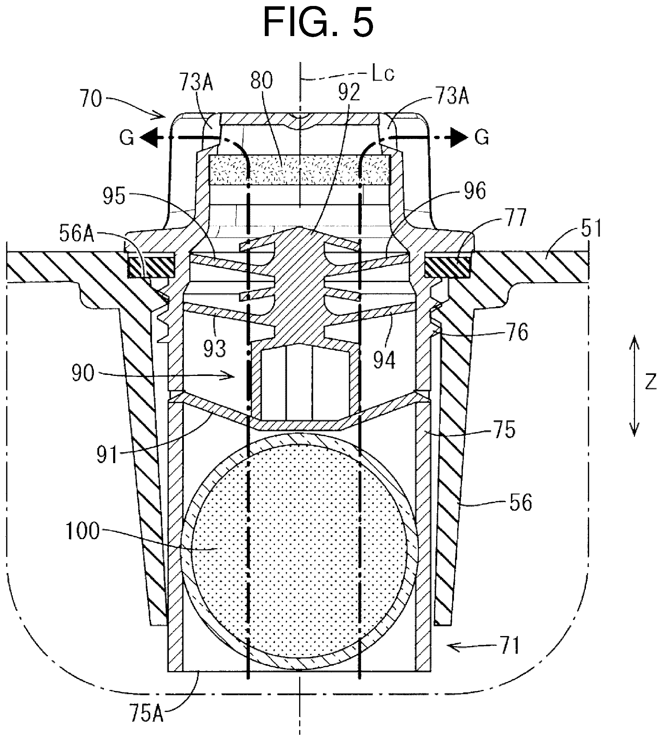

As illustrated in FIGS. 4 and 5, the liquid stopper 70 includes a stopper body 71, packing 77, a filter 80, a splash preventing body 90, and a single catalyst device 100.

The stopper body 71 is made of, for example, a synthetic resin, and includes a head portion 73 having a circular shape, and an outer peripheral wall 75. The outer peripheral wall 75 extends downward from the head portion 73 and is formed in a substantially cylindrical shape with an axis line Lc in the Z direction being a center thereof. A lower end portion 75A of the outer peripheral wall 75 is open.

The outer peripheral wall 75 includes a screw thread portion 76 on an outer periphery thereof. The lid member 50 is provided with an inner wall portion 56 to correspond to the liquid port 55. Threads are cut on an inner surface of the inner wall portion 56 correspondingly to the screw thread portion 76. The liquid stopper 70 is detachably attached to the liquid port 55 of the lid member 50 by screwing the screw thread portion 76 into the inner wall portion 56 of the liquid port 55.

The packing 77 is, for example, a ring-shaped member made of synthetic rubber or the like. In the packing 77, a lower surface of the packing is brought into close contact with a stepped surface 56A of the inner wall portion 56, whereby airtightness around the liquid port is secured.

As illustrated in FIG. 5, the liquid stopper 70 includes an opening 75A at a lower end of the outer peripheral wall 75, and an exhaust hole 73A in the head portion 73. The opening 75A is an introduction port for introducing gas G generated in the cell chamber 25 to inside the liquid stopper. The exhaust hole 73A is provided to discharge the gas G to outside. The gas G is oxygen gas and hydrogen gas produced in the cell chamber 25 caused by electrolysis of water by a charge, for example.

The liquid stopper 70 holds the filter 80, the splash preventing body 90, and the catalyst device 100 inside the stopper body 71. Specifically, in a state in which the lead-acid battery 1 is assembled, as illustrated in FIG. 5, the filter 80, the splash preventing body 90, and the catalyst device 100 are held in this order from above with respect to the stopper body 71. The catalyst device 100 is located, in relation to the splash preventing body 90, closer to a bottom surface of the stopper body 71 than the splash preventing body 90 is.

The filter 80 is located inside the head portion 73. The filter 80 is a sintered body of ceramic, such as alumina, or a sintered body of resin particles, such as polypropylene, and is a porous body.

The filter 80 is an explosion-proof filter, and suppresses entry of externally generated sparks and the like into the battery container 20. Note that the filter 80 may be omitted.

The splash preventing body 90 is made of, for example, a resin. The splash preventing body 90 includes a bottom portion 91, a support portion 92, and a plurality of splash preventing plates 93 to 96.

The splash preventing plate includes, for example, four plates which are a first splash preventing plate 93, a second splash preventing plate 94, a third splash preventing plate 95, and a fourth splash preventing plate 96. The number of splash preventing plates is not limited to four, and may be, for example, five or six.

Since the splash preventing body 90 includes the first splash preventing plate 93 to the fourth splash preventing plate 96, an exhaust path for the gas G is formed like a labyrinth inside the stopper body 71, and the electrolytic solution 35 is prevented from easily leaking out from the exhaust hole 73A.

Note that the splash preventing body 90 is not configured to close an internal space of the stopper body 71, and has a gap through which the gas G can move at a place other than the place of a cross section indicated in FIG. 5.

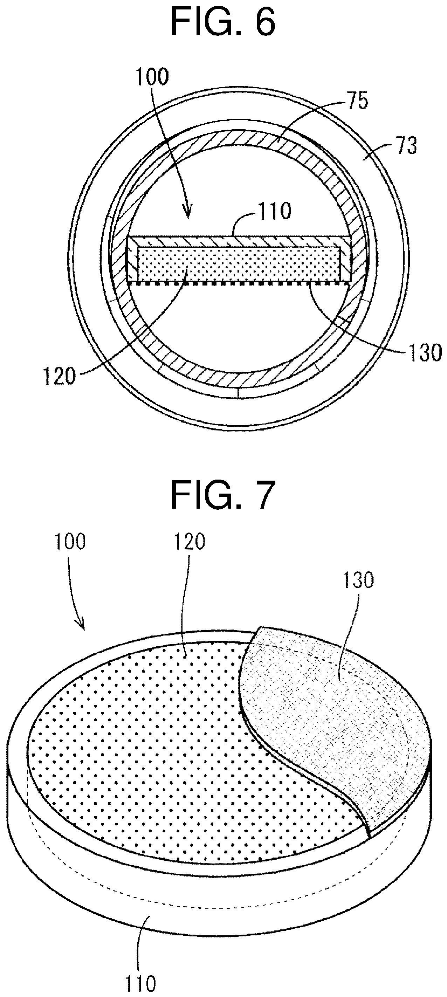

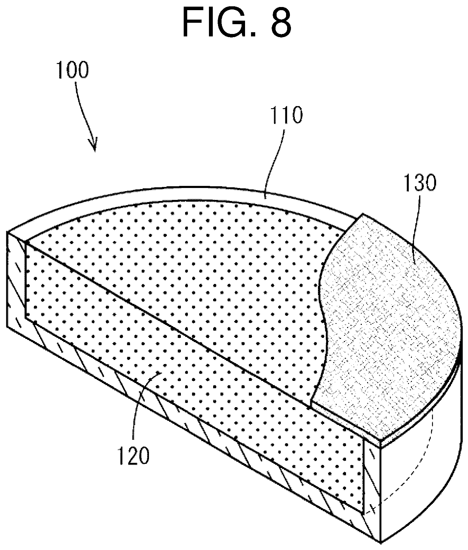

As illustrated in FIGS. 7 and 8, the catalyst device 100 is configured from a case 110, a catalyst layer 120, and a permeable membrane 130. The case 110 is made of, for example, a resin and has a bottom-closed cylindrical shape.

The catalyst layer 120 is located inside the case 110. The catalyst layer 120 recombines the oxygen gas and the hydrogen gas to change the gases back into water.

The permeable membrane 130 is positioned on a surface of the case 110 and covers the catalyst layer 120. The permeable membrane 130 is porous and allows the oxygen gas, hydrogen gas, and water vapor to pass therethrough. Preferably, a material of the permeable membrane 130 should be one that does not react with the electrolytic solution in the battery, and for example, porous PTFE can be used.

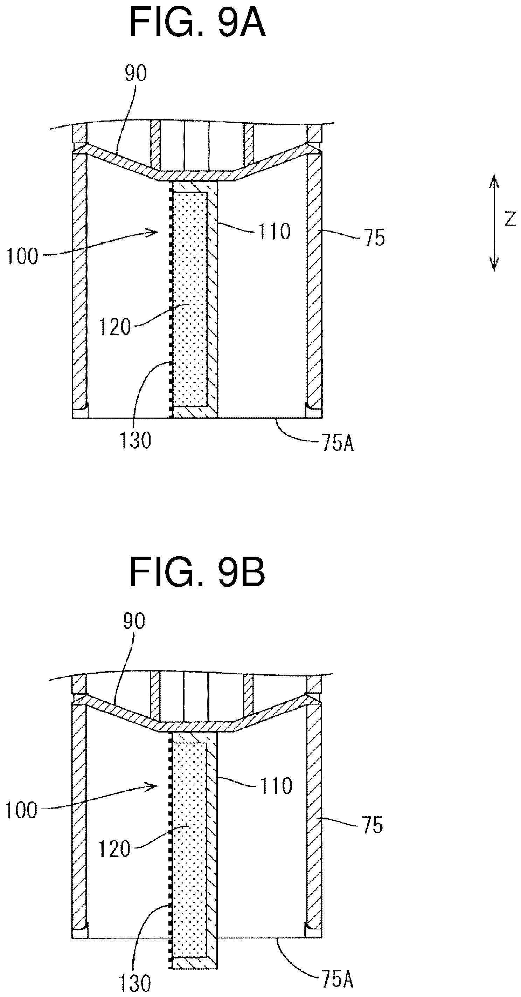

As illustrated in FIG. 9A and FIG. 9B, the catalyst device 110 is attached vertically to the stopper body 71 below the splash preventing body 90 such that a surface of the catalyst device 100 (a surface of the permeable membrane 130) is at an angle of 90° with respect to a horizontal direction.

In the present embodiment, as illustrated in FIGS. 5 and 6, the catalyst device 100 is held in the stopper body 71 by sandwiching the catalyst device 100 from both sides by the outer peripheral wall 75 of the stopper body 71. In holding the catalyst device 100, some other means may be used. Alternatively, the holding means may be provided on the splash preventing body 90. In this case, a mode in which the catalyst device is held in a suspended state is considered.

Further, the catalyst device 110 may be entirely accommodated in the stopper body 71, as illustrated in FIG. 9A, or the catalyst device 110 may partially protrude from a lower surface of the stopper body 71, as illustrated in FIG. 9B.

As indicated in FIG. 5, after the gas G has been taken in from the opening 75A at the lower end of the outer peripheral wall 75, the gas G moves in an upper direction inside the stopper body 71, passes by a periphery of the catalyst device 100, passes through the splash preventing body 90 and the filter 80, and is then discharged to the outside from the exhaust hole 73A of the head portion 73.

### 3. Description of Advantageous Effects

According to the lead-acid battery 1 described in the present embodiment, as illustrated in FIG. 5, the catalyst device 100 is disposed below the splash preventing body 90. Consequently, the splash preventing body 90 prevents water recombined from the gas G by the catalyst device 100 from being splashed upward by a vibration of a vehicle. Therefore, it becomes difficult for the water recombined from the gas G by the catalyst device 100 to reach the exhaust hole 73A at an upper part of the liquid stopper, and it is possible to make an improvement on a vibration overflow property of the electrolytic solution (water recombined from the gas G).

Further, according to the lead-acid battery 1, since the catalyst device 100 is attached vertically, the water recombined from the gas G easily moves downward along the surface of the permeable membrane 130, and does not stay on the surface of the permeable membrane 130. Therefore, the water recombined from the gas G by the catalyst device 100 is enabled to easily return to the respective cell chambers 25 of the battery container 20.

### <Embodiment 2>

In Embodiment 1, a single catalyst device 100 has been accommodated in the liquid stopper 70. In Embodiment 2, two catalyst devices 200A and 200B are accommodated in a liquid stopper 170.

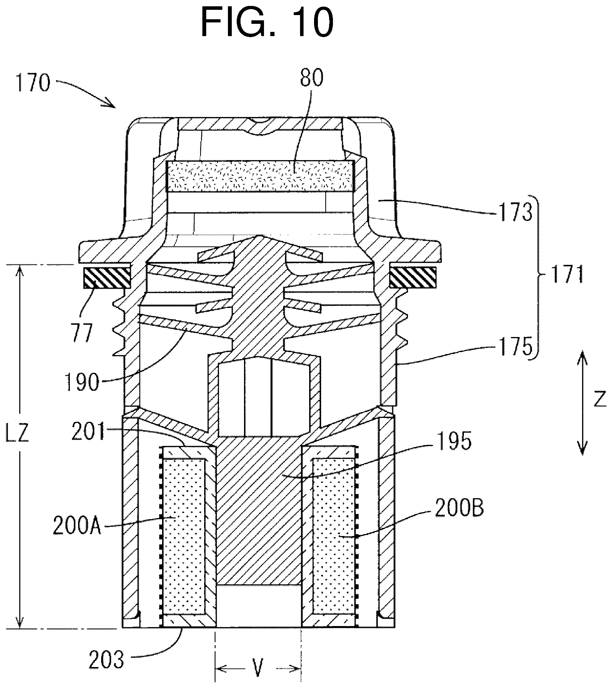

As illustrated in FIG. 10, the liquid stopper 170 includes a stopper body 171, packing 77, a filter 80, a splash preventing body 190, and two catalyst devices 200A and 200B. The stopper body 171 includes a head portion 173 and an outer peripheral wall 175.

The liquid stopper 170 holds the filter 80, the splash preventing body 190, and the two catalyst devices 200A and 200B inside the stopper body 171. Specifically, in a state in which a lead-acid battery 1 is assembled, the filter 80, the splash preventing body 190, and the two catalyst devices 200A and 200B are held in this order from above with respect to the stopper body 171. As illustrated in FIG. 10, positions of upper ends 201 and lower ends 203 of the two catalyst devices 200A and 200B in the Z direction match with each other, so that the two catalyst devices 200A and 200B are arranged at the same height.

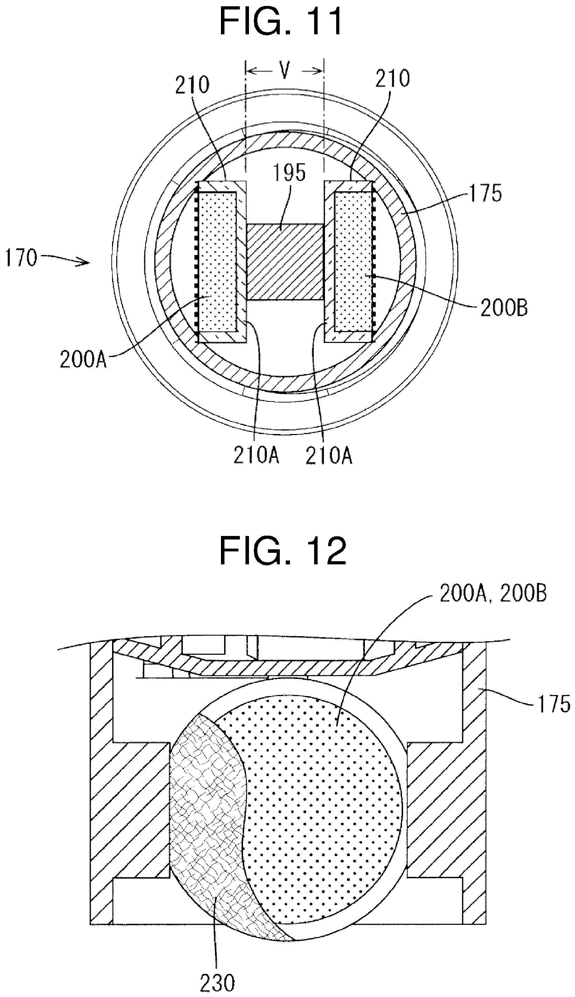

As illustrated in FIGS. 10 and 11, the two catalyst devices 200A and 200B are disposed at a predetermined interval V from each other with their back surfaces (bottom surfaces 210A of cases 210) facing each other.

In a form of Embodiment 2, a structure in which the two catalyst devices 200A and 200B are held by the outer peripheral wall 175 and a square-shaped support 195, which is installed at a central part of the liquid stopper 170, is adopted. In this example, although the support 195 is formed integrally with the splash preventing body 190, the support 195 may be a separate component. A different structure may be adopted for the holding structure of the catalyst devices 200A and 200B.

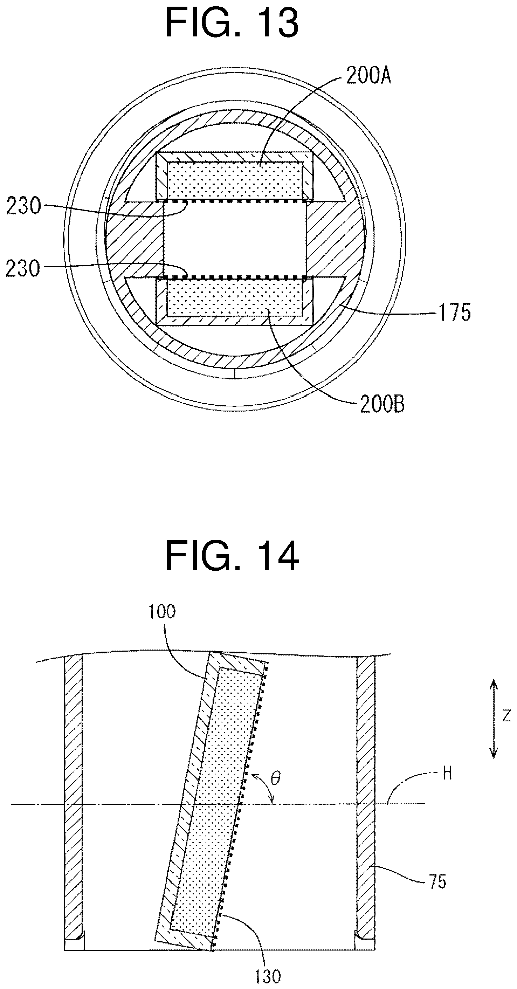

As illustrated in FIGS. 12 and 13, the two catalyst devices 200A and 200B can take the form that the two catalyst devices 200A and 200B are disposed at the predetermined interval V from each other with surfaces of the catalyst devices (surfaces of permeable membranes 130) facing each other.

In Embodiment 2, an opening 175A at a lower end of the outer peripheral wall 175 in the stopper body 171 is used as an introduction port of gas G. After the gas G has been taken in from the opening 175A at the lower end of the outer peripheral wall 175, the gas G moves in an upper direction inside the stopper body 171, passes by a periphery of the catalyst devices 200A and 200B, passes through the splash preventing body 190 and the filter 80, and is then discharged to outside from an exhaust hole 73A of the head portion 173.

An ability to recombine that is required for the catalyst device depends on a catalyst quantity and a catalyst surface area. In a case where a plurality of catalyst devices (in the present embodiment, two catalyst devices 200A and 200B) are employed, the catalyst quantity and the surface area per catalyst device can be reduced as compared with the case of employing a single catalyst device (in the present embodiment, the catalyst quantity and the surface area can be reduced to about a half). Consequently, the catalyst devices 200A and 200B can be downsized. In the liquid stopper 170, since the two downsized catalyst devices 200A and 200B are arranged at the same height, a length Lz (see FIG. 10) of the outer peripheral wall 175 of the liquid stopper 170 can be shortened.

By shortening the length Lz of the outer peripheral wall 175, it becomes possible to secure a distance W (see FIG. 3) from a liquid surface 35A to the liquid stopper 170, and thus, even if the liquid surface 35A is elevated as a result of a charge or the like, the liquid surface 35A is difficult to reach the liquid stopper 170.

By suppressing the reaching of the liquid surface 35A to the liquid stopper 170, it is possible to prevent an electrolytic solution 35 from leaking out from the exhaust hole 73A along the inside of the liquid stopper 170.

### <Other Embodiments>

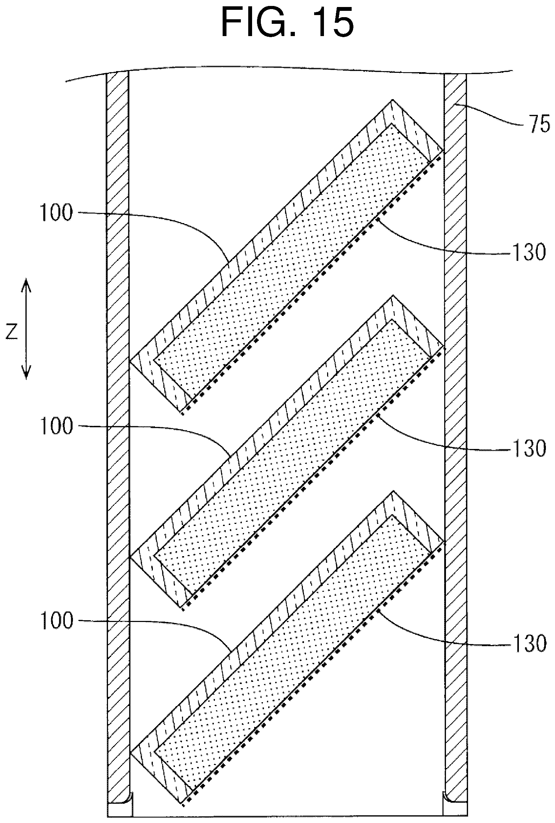

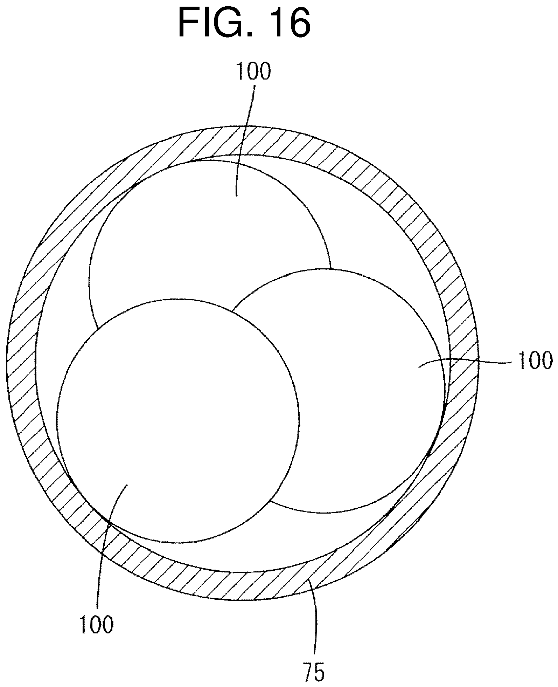

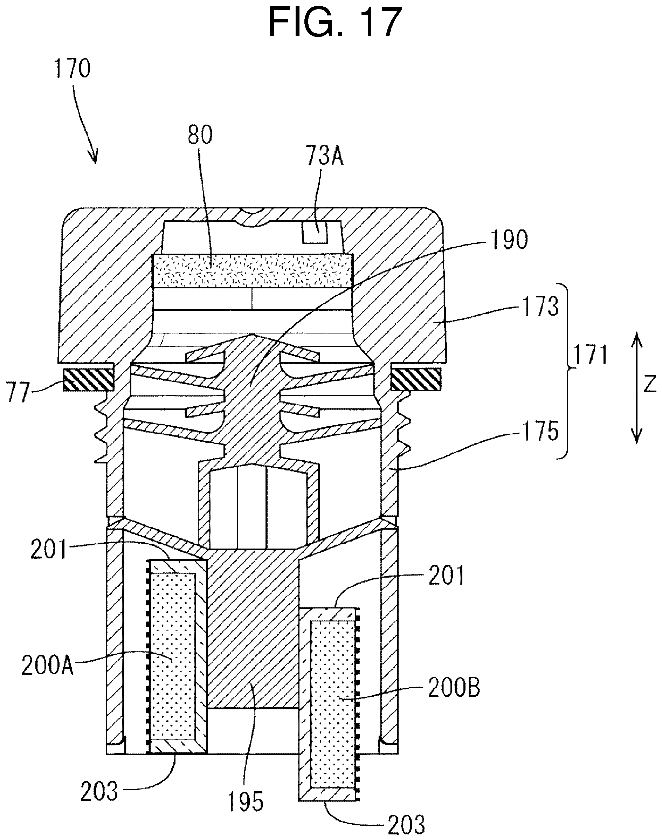

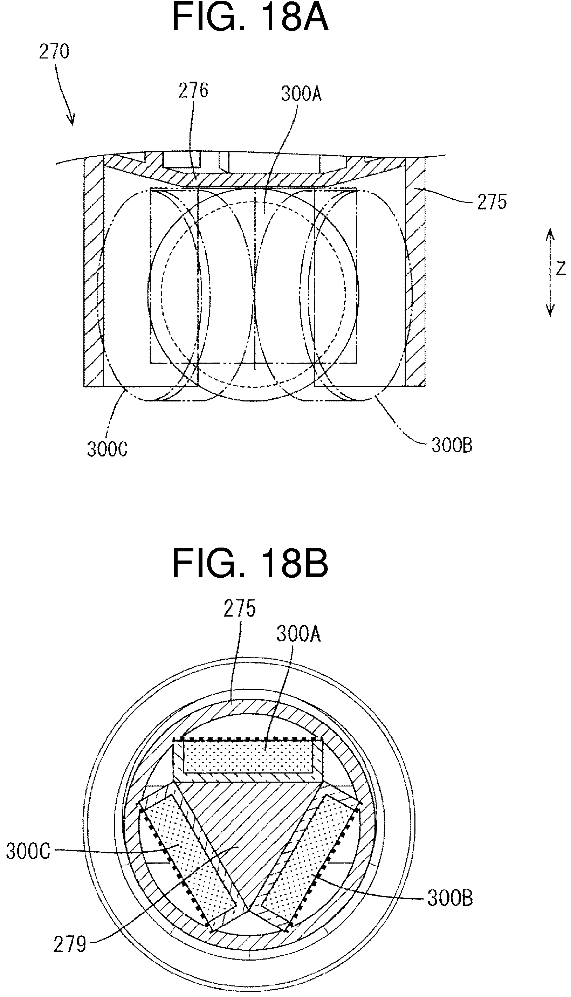

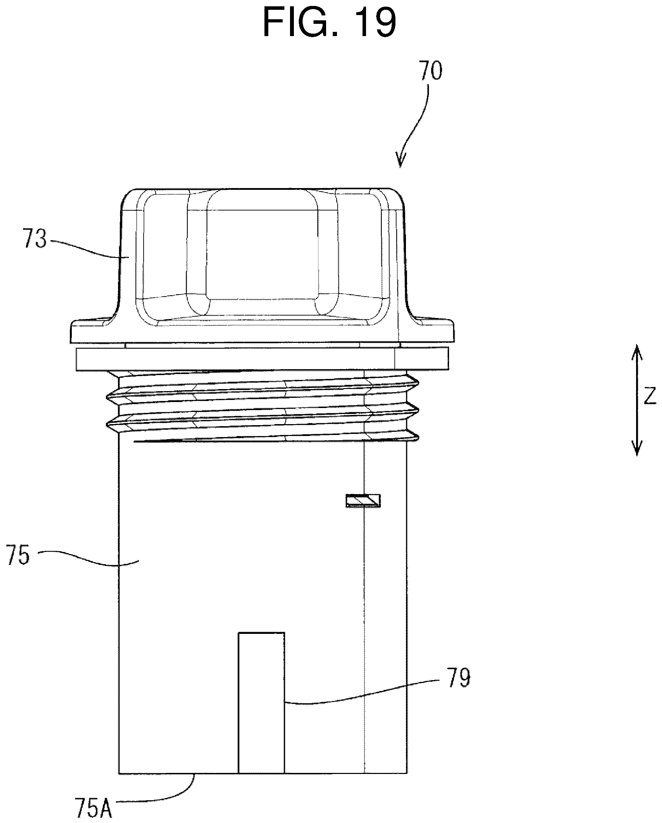

The present invention is not limited to the embodiments explained with reference to the above description and the drawings, and the technical scope of the present invention also incorporates therein, for example, the following embodiments.
(1) In Embodiment 1, the lead-acid battery 1 is applied to a four-wheeled vehicle or a two-wheeled vehicle. However, the use is not limited to the example of the embodiment. In addition, an arrangement of the cell chambers 25 of the lead-acid battery may be different from that of an aspect disclosed in Embodiment 1. That is, the arrangement includes, for example, a matrix arrangement of three columns in a depth direction and two rows in a lateral direction. A lead-acid battery of the matrix arrangement may be used in large-size vehicles such as buses. The present invention can also be applied to a lead-acid battery of the aspect in which the cell chambers 25 are arranged in rows and columns.
(2) In Embodiment 1, as one aspect of the liquid stopper 70, a liquid stopper which takes the form of the head portion 73 protruding from an upper surface of the lid member 50 (the form that attachment or detachment is performed by turning the head portion 73 with a finger) has been described. The shape of the liquid stopper 70 is not limited to the form indicated in Embodiment 1. For example, a form that the head portion 73 does not protrude from the upper surface of the lid member 50 (a form that the attachment or detachment is performed by inserting a coin into a cross-shaped groove or the like formed in the head portion 73) may be employed.
(3) In Embodiment 1, the form that the catalyst device 100 is vertically accommodated in the liquid stopper 70 has been indicated. As illustrated in FIG. 14, the catalyst device 100 may be disposed in an inclined state in which the catalyst device 100 is inclined with respect to the liquid stopper 70. The inclined state refers to a state in which an angle θ of the surface of the catalyst device 100 (the surface of the permeable membrane 130) with respect to a horizontal line H is greater than 0 degrees and less than 180 degrees (0 < θ < 180).
   Further, the number of catalyst devices 100 to be installed is not necessarily limited to one. As illustrated in FIG. 15, a plurality of catalyst devices 100 may be disposed in a stacked configuration while causing the catalyst devices 100 to be inclined. Further, as illustrated in FIG. 16, the plurality of catalyst devices 100 may take the form that the catalyst devices 100 are disposed in a stacked configuration by partially overlapping one another when viewed from the up-down direction (the Z direction).
(4) In Embodiment 2, two catalyst devices 200A and 200B are arranged at the same height with respect to the liquid stopper 170. The two catalyst devices 200A and 200B may only partially overlap one another in the Z direction (up-down direction) when viewed in the horizontal direction (a left-right direction in FIG. 17), and the positions of the upper ends 201 and the lower ends 203 may be shifted from each other in the Z direction as illustrated in FIG. 17. Further, the two catalyst devices 200A and 200B may take the form that the catalyst devices 200A and 200B are positionally shifted from each other in the Z direction and do not overlap one another other when viewed in the horizontal direction (the left-right direction in FIG. 17).
(5) In Embodiment 2, the two catalyst devices 200A and 200B have been accommodated in the liquid stopper 170. Three or more catalyst devices 300 may be disposed in the liquid stopper. For example, as illustrated in FIGS. 18A and 18B, three catalyst devices 300A, 300B, and 300C may be arranged in a liquid stopper 270. As illustrated in FIG. 18B, this example has a structure in which the three catalyst devices 300A, 300B, and 300C are arranged in an equilateral triangle shape in a horizontal cross section of the liquid stopper 270, and the three catalyst devices 300A to 300C are held by an outer peripheral wall 275 and an equilateral triangular shaped support 279 which is installed at a central part of the liquid stopper 270. A different structure may be adopted for holding the catalyst devices 300A to 300C. Further, in the above, since the number of catalyst devices used is three, the catalyst devices are arranged in an equilateral triangle shape. However, if the number of use is four, the catalyst devices may be arranged in a regular quadrangle shape in a horizontal cross section of the liquid stopper (if the number of use is N, the catalyst devices may be arranged in an N-sided regular polygonal shape). Further, the arrangement of the catalyst devices is not necessarily limited to the N-sided regular polygonal arrangement, and the catalyst devices may be arranged in any manner in the horizontal cross section as long as a predetermined number of catalyst devices can be accommodated in the liquid stopper. Note that reference numeral 276 in FIG. 18A denotes a splash preventing body.
(6) Embodiment 1 is configured such that the gas G generated in the cell chamber 25 is introduced to the inside from the opening 75A at a lower surface of the liquid stopper. As illustrated in FIG. 19, a configuration in which a slit 79 is provided in the outer peripheral wall 75 of the liquid stopper 70, and the gas G is introduced to the inside from the slit 79, in addition to the opening 75A at the lower surface of the liquid stopper, may be adopted.
(7) Embodiment 2 indicates, as one aspect of the liquid stopper 170, the form that the two catalyst devices 200A and 200B are disposed, in the stopper body 171, with their back surfaces separated from each other as illustrated in FIGS. 10 and 11. A holding method different from that shown in FIG. 10 (for example, performing the holding by using the outer peripheral wall 175 of the stopper body 171) may be adopted, and the two catalyst devices 200A and 200B may be disposed in the stopper body 171 with their back surfaces brought into close contact with each other. Also, similarly, Embodiment 2 indicates, as one aspect of the liquid stopper 170, the form that the two catalyst devices 200A and 200B are disposed, in the stopper body 171, with their surfaces separated from each other as illustrated in FIGS. 12 and 13. The two catalyst devices 200A and 200B may be arranged in the stopper body 171 with their surfaces brought into close contact with each other.

### DESCRIPTION OF REFERENCE NUMERALS

1 Lead-acid battery
10 Battery case
20 Battery container
50 Lid member
70 Liquid stopper
71 Stopper body
80 Filter
90 Splash preventing body
100 Catalyst device
110 Case
120 Catalyst layer
130 Permeable membrane

## Claims

1. A lead-acid battery comprising:
a battery case;
an electrode plate accommodated in the battery case;
an electrolytic solution accommodated in the battery case; and
a liquid stopper attached to the battery case, wherein
the liquid stopper comprises:
a stopper body of a cylindrical shape;
a splash preventing body located inside the stopper body; and
a catalyst device which promotes a reaction to produce water from gas generated by a charge-discharge reaction, and
the catalyst device is either entirely or partially inside the stopper body and is located, in relation to the splash preventing body, below the splash preventing body.

2. The lead-acid battery according to claim 1, wherein:
the catalyst device includes a case which is cylindrically shaped and has an open surface, a catalyst layer which is accommodated in the case, and a permeable membrane which covers a surface of the catalyst layer and allows gas to pass therethrough; and
the catalyst device is disposed vertically or inclined with respect to the stopper body such that a surface of the permeable membrane has an angle with respect to a horizontal direction.

3. The lead-acid battery according to claim 1 or 2, wherein
the catalyst device includes a plurality of catalyst devices, and all of the catalyst devices are arranged at a same height in an up-down direction, or at least some of the catalyst devices are arranged at the same height in the up-down direction.

4. A liquid stopper for use in a lead-acid battery, the liquid stopper comprising:
a stopper body of a cylindrical shape whose bottom surface is open;
a splash preventing body located inside the stopper body; and
a catalyst device which promotes a reaction to produce water from gas, wherein
the catalyst device is either entirely or partially inside the stopper body and is located, in relation to the splash preventing body, closer to the bottom surface of the stopper body than the splash preventing body is.
